# EUROPEAN PATENT SPECIFICATION

(11) **EP 0 409 352 B1**
(45) Date of publication and mention of the grant of the patent: **09.03.1994**
(21) Application number: 90201967.8
(22) Date of filing: 20.07.1990
(51) Int. Cl.: B62H 1/02

(54) **Bicycle stand**
Fahrradständer
Support pour bicyclette

(30) Priority: 21.07.1989 NL 8901894
(43) Date of publication of application: 23.01.1991
(73) Proprietor: Batavus B.V., NL-8444 AR Heerenveen (NL)
(72) Inventor: Oskam, Willem, NL-8446 MZ Heerenveen (NL)
(74) Representative: Smulders, Theodorus A.H.J., Ir.

(56) References cited:
- CH-A- 166 637
- DE-C- 819 200
- FR-A- 2 540 816
- GB-A- 1 211 088
- US-A- 2 229 551

## Description

The invention relates to a bicycle side stand designed to be mounted on a rear fork, or at least a support plate attached thereto, of a bicycle between rear wheel and crankshaft, which bicycle stand comprises a housing mounting a single support leg to be pivoted between and locked in at least two positions, the housing being formed such that, when mounted to a bicycle in a position for use the plane of the pivoting movement of the support leg extends at an oblique angle relative to the longitudinal median plane of the bicycle, the support leg being fixedly attached to a pin extending substantially perpendicularly to said support leg, terminal portions of said pin being bearing-mounted for rotation relative to the housing.

Such bicycle stands are disclosed in CH-A-166,637 and US-A-2,229,551, where the support leg is connected with an end of the pin and is formed from a rod as one whole with the pin by bending a terminal portion of that rod.

A drawback of the known bicycle stands of the type described hereinabove is that the bent portion of the rod where the support leg merges with the pin forms a projecting element harbouring risk of injury.

A further problem is to provide a durable, stable suspension for the support leg relative to the housing.

The object of the invention is to provide a bicycle stand of the type described in the preamble, in which the problems referred to are overcome.

To achieve this object, according to the invention the support leg is connected with the pin between the terminal portions of that pin, which are bearing-mounted relatively to the housing.

This permits optimum use to be made of the space under the rear fork for rotatably mounting the terminal portions of the pin in spaced relation, without the transition from the support leg to the pin projecting from the housing and on the side of the rear fork of the bicycle. By spacing apart the bearings for transmitting the moment initiated by the support leg, a reduction of the load on these bearings is achieved. The wear that these bearings which rotatably support the pin are subject to, is limited. Optionally they may be of lighter construction than in the known bicycle stand, or the gained increase of the stability of the bearings of the pin may be employed for the use of a support leg capable of pivoting further to the side of the frame of the bicycle. This last step allows a more stable support of the bicycle, but also the exertion of a greater moment by the support leg.

Further, in particular when the plane of pivoting movement extends at a relatively large angle relative to the longitudinal median plane of the bicycle, an improved support of the pin relative to the rear fork on the side of the support leg is obtained. This advantage can be achieved in virtue of the fact that at the end of the pin there is no projecting bent transition to a support leg, so that the end of the pin which is proximal to the rear fork can be bearing-mounted at a very small distance from the rear fork, and hence is stable relatively to that rear fork.

Particular embodiments of the invention are set out in the dependent claims.

One embodiment of the invention will now be further explained and illustrated with reference to the accompanying drawings, in which:
Fig. 1 is a rear sectional view of a bicycle stand according to the invention mounted on a rear fork of a bicycle;
Fig. 2 is a front view of the bicycle stand according to Fig. 1 showing a part of a bicycle; and
Fig. 3 is a view of a part of a housing of the bicycle stand according to Figs. 1 and 2.

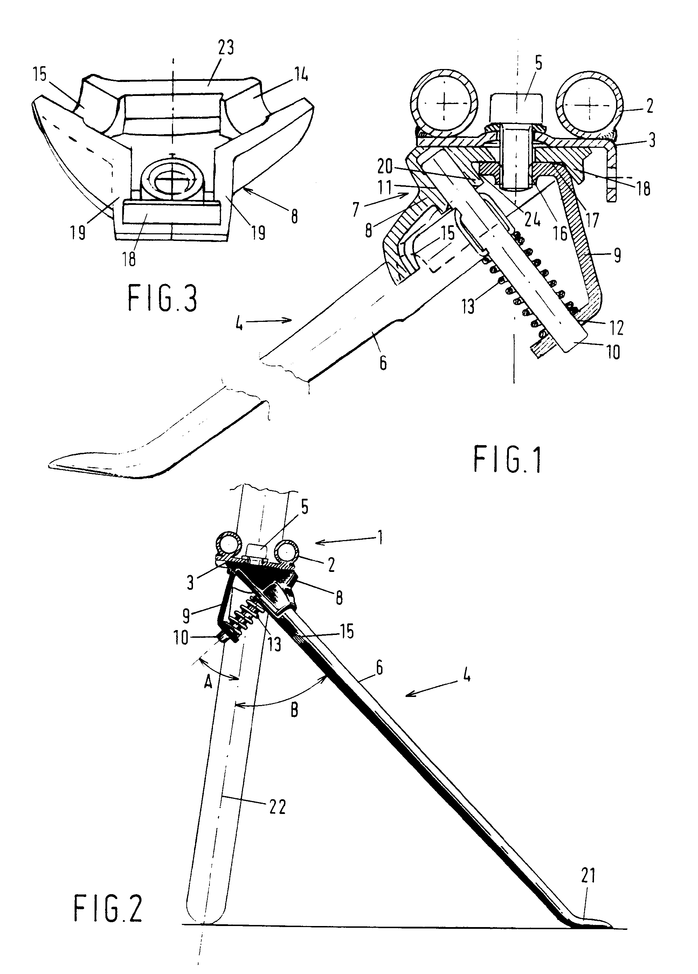

Referring to Figs. 1 and 2, a part of a bicycle 1 is shown with a rear fork 2 and a support plate 3 welded thereto. A bicycle stand 4 according to the invention is mounted on the support plate 3 by means of a bolt 5. The bicycle stand 4 comprises a support leg 6, a housing 7, comprising a positioning member 8 and a bracket member 9. Mounted on the support leg 6 is a pin 10, extending in substantially transverse direction relative to that support leg 6. At terminal portions of the pin 10 suspensions 11 and 12 are formed by holes in the positioning member 8 and the bracket member 9, respectively, these holes mounting the pin 10 for rotation relative to the housing 7 and for displacement in its longitudinal direction. Between the support leg 6 and the bracket member 9 a helical spring 13 is arranged around the pin 10. Provided in positioning member 8 are positioning recesses 14 and 15 (see also Fig. 3). The spring 13 presses the support leg 6 and the pin 10 in the direction of the positioning recesses 14 and 15. The positioning member 8 is clamped in position between the bracket member 9 and the support plate 3. Provided in the bracket member 9 is a threaded hole 16 for the bolt 5 to engage. The positioning member comprises a clamping surface 17 bounded by ribs 18 and 19 and an upright edge 20 surrounding the hole 11. Provided at the end of the stand that is remote from the housing 7 is a foot 21.

When a bicycle 1 comprising a bicycle stand 4 according to the invention is arranged to be supported by this stand, the support leg 6 exerts a moment on the bicycle 1, which prevents the bicycle from falling down. This moment is initiated by the support leg and transmitted via the pin 10 to the housing 7. The pin 10, extending substantially transverse to the support leg 6 may be of relatively great length in virtue of the fact that no elements disposed beyond the ends of that pin are connected to that pin. Owing to the relatively great length of the pin 10 the load on the suspensions 11 and 12 at the ends of the pin is relatively light, and, accordingly, these suspensions may be of light construction, can be loaded and/or will be wear-resistant.

The angle A between the pin 10 and the longitudinal median plane 22 of the bicycle 1 defines the angle B between the plane of the pivotal movement of the support leg 6 and the longitudinal median plane 22 of the bicycle 1. According as angle B is greater, the angle A is smaller and the pin 10 to be mounted under the rear fork 2 may be of greater length. It is advantageous for the end of the pin which is proximal to the rear fork 2 to be bearing-mounted very closely to that rear fork.

In virtue of the fact that the support leg 6 is mounted between the terminal portions of the pin 10, bearing-mounted in the housing 7, the positioning recesses 14, 15 which engage the support leg may be turned towards the inside of the housing 7. This eliminates the necessity of disposing any locking means on the outside of the housing. Such locking means harbour the risk of injury and of damage to clothes and limit the options as to the outward appearance of the housing 7.

The support leg 6 is pressed into the direction of the positioning recesses 14 and 15 provided in the positioning member 8 by the spring 13 acting in the longitudinal direction of the pin 10 and is guided by the pin 10 adapted to be displaced in its longitudinal direction in the suspensions 11 and 12. When the support leg is moved to a point in front of one of the positioning recesses 14 or 15, the support leg will be locked in that positioning recess as a result of the action of the spring 13. The support leg 6 can thus be readily extended and retracted.

Each of the housing members 8 and 9 mounts a terminal portion of the pin 10 and before being mounted on a bicycle the housing members 8 and 9 can each be slid over one of the terminal portions of the pin 10 in the axial direction of the pin 10 to abut the other housing member so as to form the housing 7. For the mutual fixation of the members 8 and 9 of the housing 7 the bracket member 9 is drawn towards the rear fork 2 of the bicycle by means of the bolt 5, with the positioning member 8 being clamped therebetween. To establish the relative positioning of the positioning member 8 and the bracket member 9 the positioning member is provided with a clamping surface 17 formed to correspond with the bracket member, which clamping surface 17 is bounded by the ribs 18 and 19 and the edge 20 surrounding the hole 11.

To assemble the stand the short end of the pin 10 can be mounted in the hole 11 in the housing 7. Then the spring 13 can be slid over the long end of the pin 10, and the pin 10 and the spring 13 can be locked by mounting the bracket member 9 over the pin 10 until it is in engagement with the surface 17. Counter to the force exerted by the spring 13, the bracket member 9 remains fixated relatively to the positioning member 8 and the pin 10, on account of the fact that the force exerted by the spring 13 on the bracket member 9 causes the bracket member 9 to tilt relatively to the positioning member 8, thus forcing the bracket member 9 into clamping engagement with the walls of the rib 18 and the edge 20 bounding the surface 17. The housing 7 can be assembled without separate attachment devices or tools, and in a very short time as well, since assembly comprises only single movements controlled by stops.

To obtain a reliable engagement of the bracket member 9 with the positioning member 8, until the stand is mounted on a bicycle, the bracket member 9 preferably comprises a sharp edge 24 engaging said wall of the edge 20.

Because the positioning recesses 14 and 15 are spaced away from the pin 10 on which the support leg 6 pivots, a relatively small force exerted by the positioning recesses on the support legs will yield a sufficiently strong locking of the support leg 6. Further, the supporting surfaces of the positioning recesses 14 and 15 can thus be formed to be sufficiently large to ensure that the pressure exerted on the positioning member is sufficiently low to allow that member to be made of plastic. Plastic design in turn offers the advantage that the guide of the support leg 6 need not be lubricated and that the positioning member 8 may be formed as one whole, while at the same time it allows relatively great freedom as to the design of the upwardly turned side of the positioning member which is visible to the user.

The plastic from which the housing 7 is to be made is preferably a polyacetal. This type of plastic which is processed by injection moulding has a low coefficient of friction when friction with metal is involved and is wear resistant.

When the support leg 6 is locked in one of the positioning recesses 14 and 15, the distance over which the pin 10 extends into the mounting bore 11 is greater than the depth of the positioning recesses 14 and 15 relative to an edge 23 extending between these recesses 14 and 15. Thus it is ensured that the pin 10 remains bearing-mounted in the bore 11 when the support leg 6 is pivoted from one positioning recess to the other.

The pin 10 of a bicycle stand according to the invention for use in a conventional bicycle preferably has a length of at least 55 mm, and the distance between the suspensions 11 and 12 is preferably at least 35 mm.

Owing to the fact that the support leg 6 of a bicycle stand according to the invention, when in the extended position, can make a relatively great angle B with the longitudinal median plane 22 of the bicycle, the support leg 6 may have a relatively great length and rest on a support surface at a relatively great distance from the longitudinal median plane 22 of the bicycle 1, so that a relatively small surface pressure is exerted on that supporting surface. To further reduce the surface pressure exerted on the supporting surface, the support leg 6 may comprise a foot 21, so that the bicycle supported by the stand can be positioned on an even softer supporting surface without the support leg 6 penetrating into the soil and causing the bicycle to fall. In a conventional stand, which has a relatively short support leg, such a foot, when the support leg is retracted, would extend into the cyclic path traversed by the cyclist's foot during cycling, so that the foot would knock against it. The support leg 6 of the bicycle stand according to the invention, however, can be designed to be so long that when the support leg 6 is retracted the foot 21 is disposed further back, clear of the path of the cyclist's foot.

## Claims

1. A bicycle side stand (4) designed to be mounted on a rear fork, or at least a support plate (3) attached thereto, of a bicycle between rear wheel and crankshaft, said bicycle stand (4) comprising a housing (7) mounting a single support leg (6) to be pivoted between and locked in at least two positions, the housing (7) being formed such that, when mounted to a bicycle in a position for use, the plane of the pivoting movement of the support leg extends at an oblique angle relative to the longitudinal median plane (22) of the bicycle, the support leg (6) being fixedly attached to a pin (10) extending substantially perpendicularly to said support leg (6), the terminal portions of said pin being bearing-mounted for rotation relative to the housing (7), characterized in that the support leg (6) is connected with said pin (10) between the terminal portions of said pin (10), which are bearing-mounted relatively to the housing (7).

2. A bicycle stand according to claim 1, characterized in that the housing (7) comprises two housing members (8 and 9), each of these housing members (8 and 9) mounting a terminal portion of the pin (10) and each of said housing members (8 and 9) being designed to be slid, prior to being mounted on a bicycle, in axial direction of the pin (10) over one of the terminal portions of the pin (10) to abut the other housing member so as to form the housing (7).

3. A bicycle stand according to claim 2, comprising a bolt for mounting the stand on the rear fork, characterized in that the housing members (8 and 9) in mounted position are clamped together by means of said bolt (5).

4. A bicycle stand according to claim 2, in which positioning recesses are provided in the housing formed to correspond with the support leg, the pin can be displaced in its longitudinal direction relatively to the housing and in which a spring is arranged around the pin, which spring rests against the housing and keeps the pin pressed in the direction of said positioning recesses, characterized in that the positioning recesses (14, 15) face the inside of the housing (7) and that the spring (13) is arranged on the side of the support leg (6) which is remote from the positioning recesses (15) and which spring rests against the housing member (9) which is disposed opposite the positioning recesses (14, 15).

5. A bicycle stand according to claim 4, characterized in that a portion of the one housing member (9) is disposed between walls of the other housing member (8), which extend substantially parallel to and spaced away from the pin (10), with said portion of the one housing member (9) being clamped between said walls of the other housing member (8).

6. A bicycle stand according to claim 5, characterized in that the portion of the one housing member (9) clamped between said walls of the other housing member (8) rests against a first wall surface turned towards the pin (10) and a second wall surface turned away from the pin (10), the second wall being disposed at a smaller distance from the pin (10) than the first wall and the area where the portion of the one housing member (9) rests against the second wall is disposed further away in longitudinal direction of the pin from the end of the pin (10) mounted in the one housing member (9) than the area where that portion of the one housing member (9) rests against the first wall.

7. A bicycle stand according to claim 4, characterized in that the positioning recesses (14 and 15) are spaced away from the pin (10) in a member (8) of the housing (7) which member is made of plastic.

8. A bicycle stand according to claim 7, characterized in that said plastic is a polyacetal.

9. A bicycle stand according to claim 8, characterized in that the housing member (9) disposed opposite the positioning recesses (14, 15) has a hole (16) provided therein with a helical thread which corresponds with the helical thread of the bolt (5) for mounting the stand (4), the housing member (8) made of plastic comprising an engagement surface (17) for positioning that member (8) between the further member (9) and the rear fork (2) or at least the support plate (3) of the bicycle mounted thereto.

10. A bicycle stand according to claim 1, characterized in that the pin (10) has a length of at least 55 mm and the mutual distance between the suspensions (11, 12) of the terminal portions of the pin (10) is at least 35 mm.

## Patentansprüche

1. Fahrradseitenständer (4) zur Montage an einer Hintergabel oder zumindest an einer daran befestigten Stützplatte (3) eines Fahrrades zwischen Hinterrad und Kurbelwelle, wobei der Fahrradständer (4) ein Gehäuse (7) aufweist, an dem ein einzelnes Stützbein (6) schwenkbar zwischen und einrastbar in zwei Positionen befestigt ist, wobei das Gehäuse (7) derart geformt ist, daß bei Montage an einem Fahrrad in Benutzungsposition die Ebene der Schwenkbewegung des Stützbeins in schrägem Winkel zur longitudinalen Mittelebene (22) des Fahrrades liegt, das Stützbein (6) mit einem sich im wesentlichen senkrecht zum Stützbein (6) erstreckenden Stift (10) verbunden ist und die Endabschnitte des Stifts zur Drehung relativ zum Gehäuse (7) auf Lager montiert sind, dadurch gekennzeichnet, daß das Stützbein (6) mit dem Stift (10) zwischen den Endabschnitten des Stifts (10), die relativ zum Gehäuse (7) auf Lager montiert sind, verbunden ist.

2. Fahrradständer nach Anspruch 1, dadurch gekennzeichnet, daß das Gehäuse (7) zwei Gehäuseglieder (8 und 9) aufweist, an die jeweils ein Endabschnitt des Stifts montiert ist und deren jedes Gehäuseglied ( 8 und 9) vor der Montage am Fahrrad in axialer Richtung des Stifts (10) über einem der Endabschnitte des Stifts (10) gleitet, um mit dem anderen Gehäuseglied zur Bildung des Gehäuses (7) in Anlage zu gelangen.

3. Fahrradständer nach Anspruch 2 mit einem Bolzen zur Montage des Ständers an der Hintergabel, dadurch gekennzeichnet, daß die Gehäuseglieder (8 und 9) in montierter Position mittels des Bolzens (5) zusammengeklammert sind.

4. Fahrradständer nach Anspruch 2, in dem im Gehäuse mit dem Stützbein zusammenwirkende Positionierausnehmungen geformt sind, wobei der Stift in seiner longitudinalen Richtung relativ zum Gehäuse verschoben werden kann und um den Stift herum eine Feder angeordnet ist, die sich am Gehäuse abstützt und den Stift in Richtung der Positionierausnehmungen vorspannt, dadurch gekennzeichnet, daß die Positionierausnehmungen (14, 15) an der Innenfläche des Gehäuses (7) anliegen und die Feder (13) an der von den Positionierausnehmungen (15) entfernten Seite des Stützbeins (6) angeordnet ist, wobei die Feder sich gegen das den Positionierausnehmungen (14, 15) gegenüberliegende Gehäuseglied (9) abstützt.

5. Fahrradständer nach Anspruch 4, dadurch gekennzeichnet, daß ein Abschnitt eines Gehäusegliedes (9) zwischen Wänden des anderen Gehäusegliedes (8) angeordnet ist, die sich im wesentlichen parallel zu und beabstandet von dem Stift (10) erstrecken, wobei der Abschnitt des einen Gehäusegliedes (9) zwischen den Wänden des anderen Gehäusegliedes (8) geklammert ist.

6. Fahrradständer nach Anspruch 5, dadurch gekennzeichnet, daß der Abschnitt des einen Gehäusegliedes (9), der zwischen Seitenwänden des anderen Gehäusegliedes (8) geklammert ist, sich an einer ersten zum Stift (10) hin gerichteten Wandfläche und einer zweiten vom Stift (10) weg gerichteten Wandfläche abstützt, wobei die zweite Wand in einem kleineren Abstand von dem Stift (10) als die erste Wand angeordnet ist und die Fläche, mit der sich der Abschnitt des einen Gehäusegliedes (9) gegen die zweite Wand abstützt, in longitudinaler Richtung zum Stift weiter vom im Gehäuseglied (9) liegenden Ende des Stiftes (10) weg angeordnet ist als die Fläche, mit der sich der entsprechende Abschnitt des einen Gehäusegliedes (9) gegen die erste Wand abstützt.

7. Fahrradständer nach Anspruch 4, dadurch gekennzeichnet, daß die Positionierausnehmungen (14 und 15) von dem Stift (10) beabstandet sind in einem aus Kunststoff bestehenden Glied (8) des Gehäuses (7).

8. Fahrradständer nach Anspruch 7, dadurch gekennzeichnet, daß der Kunststoff ein Polyacetal ist.

9. Fahrradständer nach Anspruch 8, dadurch gekennzeichnet, daß das den Positionierausnehmungen (14, 15) gegenüberliegende Gehäuseglied (9) ein Loch (16) mit einem helikalen Gewinde aufweist, das mit einem helikalen Gewinde des Bolzens (5) für die Montage des Ständers (4) zusammenwirkt, wobei das aus Kunststoff bestehende Gehäuseglied (8) eine Eingreiffläche (17) zur Positionierung dieses Gliedes (8) zwischen dem weiteren Glied (9) und der Hintergabel (2) oder zumindest der am Fahrrad montierten Stützplatte (3) aufweist.

10. Fahrradständer nach Anspruch 1, dadurch gekennzeichnet, daß der Stift (10) eine Länge von mindestens 55 mm hat und der Abstand der Aufhängungen (11, 12) der Endabschnitte des Stiftes (10) voneinander mindestens 35 mn beträgt.

## Revendications

1. Béquille latérale (4) de bicyclette, destinée à être montée sur une fourche arrière d'une bicyclette, ou du moins sur une plaque de support (3) fixée à cette fourche, entre la roue arrière et le pédalier, ladite béquille (4) de bicyclette comprenant un logement (7) recevant une unique jambe d'appui (6) pouvant être pivotée et verrouillée dans au moins deux positions, le logement (7) étant conçu de telle sorte qu'à l'état monté sur une bicyclette dans une position d'utilisation, le plan du mouvement de pivotement de la jambe d'appui s'étend sous un angle oblique par rapport au plan médian longitudinal (22) de la bicyclette, la jambe d'appui (6) étant rigidement fixée à un axe (10) s'étendant sensiblement perpendiculairement à ladite jambe d'appui (6), les parties terminales dudit axe étant montées, dans des paliers, à rotation par rapport au logement (7), caractérisée en ce que la jambe d'appui (6) est reliée audit axe (10) entre les parties terminales dudit axe (10), qui sont montées dans des paliers par rapport au logement (7).

2. Béquille de bicyclette selon la revendication 1, caractérisée en ce que le logement (7) comprend deux éléments de logement (8 et 9), chaque élément de logement (8 et 9) recevant une partie terminale de l'axe (10) et chaque élément de logement (8 et 9) étant conçu pour être enfilé dans la direction axiale de l'axe (10), avant d'être monté sur une bicyclette, sur une des parties terminales de l'axe (10), afin de venir buter contre l'autre élément de logement de manière à former le logement (7).

3. Béquille de bicyclette selon la revendication 2, comprenant un boulon pour monter la béquille sur la fourche arrière, caractérisée en ce que les éléments de logement (8 et 9) sont, en position montée, mutuellement assemblés avec serrage au moyen dudit boulon (5).

4. Béquille de bicyclette selon la revendication 2, avec des évidements de positionnement prévus dans le logement et configurés de manière à correspondre à la jambe d'appui, l'axe pouvant être déplacé dans sa direction longitudinale par rapport au logement et un ressort étant disposé autour de l'axe, ressort qui s'appuie contre le logement et maintient l'axe pressé dans la direction desdits évidements de positionnement, caractérisée en ce que les évidements de positionnement (14, 15) sont tournés vers l'intérieur du logement (7) et en ce que le ressort (13) est disposé sur le côté de la jambe d'appui (6) qui est éloigné des évidements de positionnement (14, 15), ledit ressort (13) s'appuyant contre l'élément de logement (9) qui est disposé à l'opposé des évidements de positionnement (14, 15).

5. Béquille de bicyclette selon la revendication 4, caractérisée en ce qu'une partie d'un premier élément de logement (9) est disposée entre des parois de l'autre élément de logement (8), qui s'étendent sensiblement parallèlement à l'axe (10) et à distance de ce dernier, ladite partie du premier élément de logement (9) étant serrée entre lesdites parois de l'autre élément de logement (8).

6. Béquille de bicyclette selon la revendication 5, caractérisée en ce que la partie du premier élément de logement (9) serrée entre lesdites parois de l'autre élément de logement (8) est en appui contre une première surface de paroi tournée en direction de l'axe (10) et une seconde surface de paroi tournée en éloignement de l'axe (10), la seconde paroi étant disposée à une plus petite distance de l'axe (10) que la première paroi, et la région dans laquelle la partie du premier élément de logement (9) est en appui contre la seconde paroi étant disposée plus loin, dans la direction longitudinale de l'axe, de l'extrémité de l'axe (10) montée dans le premier élément de logement (9), que la région dans laquelle ladite partie du premier élément de logement (9) est en appui contre la première paroi.

7. Béquille de bicyclette selon la revendication 4, caractérisée en ce que les évidements de positionnement (14 et 15) sont réalisés à distance de l'axe (10) dans un élément (8) du logement (7), élément qui est réalisé en matière plastique.

8. Béquille de bicyclette selon la revendication 7, caractérisée en ce que ladite matière plastique est un polyacétal.

9. Béquille de bicyclette selon la revendication 8, caractérisée en ce que l'élément de logement (9) disposé à l'opposé des évidements de positionnement (14, 15) possède un trou (16), pratiqué dans cet élément et présentant un filetage hélicoïdal qui correspond au filetage hélicoïdal du boulon (5) pour le montage de la béquille (4), l'élément de logement (8) réalisé en matière plastique comprenant une surface d'engagement (17) pour positionner cet élément (8) entre l'autre élément (9) et la fourche arrière (2), ou du moins la plaque de support (3) de la bicyclette qui est montée sur cette fourche.

10. Béquille de bicyclette selon la revendication 1, caractérisée en ce que l'axe (10) possède une longueur d'au moins 55mm, et la distance mutuelle entre les paliers (11, 12) des parties terminales de l'axe (10) est d'au moins 35mm.
